# EUROPÄISCHE PATENTANMELDUNG

(11) **EP 3 576 380 A1**
(43) Veröffentlichungstag der Anmeldung: **04.12.2019**
(21) Anmeldenummer: 18174775.9
(22) Anmeldetag: 29.05.2018
(51) Int. Cl.: H04L 29/12

(54) **VERFAHREN ZUR REGISTRIERUNG VON INDUSTRIELLEN AUTOMATISIERUNGSGERÄTEN ODER KOMMUNIKATIONSGERÄTEN ZUGEORDNETEN GERÄTENAMEN IN EINEM NAMENSDIENST-SYSTEM UND KONTROLL-KOMPONENTE**

(71) Anmelder: Siemens Aktiengesellschaft, 80333 München (DE)
(72) Erfinder: Albrecht, Harald, 90475 Nürnberg (DE); Höme, Stephan, 90475 Nürnberg (DE); Talanis, Thomas, 90475 Nürnberg (DE)

(57) **Zusammenfassung**

Zur Registrierung von industriellen Automatisierungsgeräten oder Kommunikationsgeräten zugeordneten Gerätenamen in einem Namensdienst-System umfassen zumindest ausgewählte Automatisierungs- oder Kommunikationsgeräte jeweils eine Namensdienst-Komponente. Mittels ihrer Namensdienst-Komponente steuern die ausgewählte Automatisierungs- oder Kommunikationsgeräte ein Senden einer Registrierungsanforderung mit einer Zuordnung zwischen ihrem jeweils zugeordneten Gerätenamen und zumindest einer jeweils konfigurierten Kommunikationsnetzadresse an eine Kontroll-Komponente, die dem Namensdienst-Server zugeordnet ist. Abhängig von mehreren Überprüfungen verwirft die Kontroll-Komponente Registrierungsanforderungen oder leitet diese an den Namensdienst-Server weiter.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im Wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 2 975 477 A1 ist ein Verfahren zur Registrierung von Gerätenamen aus einem industriellen Automatisierungssystem bei einem Kommunikationsnetz-Namensdienst beschrieben, bei dem mittels einer Regelbasis geräteindividuell festgelegt wird, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

EP 2 996 311 A1 betrifft ein Verfahren zur Bereitstellung von Informationen über Kommunikationsgerätenamen innerhalb eines industriellen Automatisierungssystems, bei dem bei einer Zuweisung bzw. Änderung eines Gerätenamens eines Kommunikationsgeräts ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet wird. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

In EP 3 041 199 A1 ist ein Verfahren zur Ermittlung von Kommunikationsgeräteadressen innerhalb eines Kommunikationsnetzes eines industriellen Automatisierungssystems beschrieben, bei dem ausgewählten Kommunikationsgeräten des industriellen Automatisierungssystems jeweils eine Speichereinheit zugeordnet ist, in der jeweils zumindest ein Teil von Namensdienst-Informationen temporär gespeichert wird, die durch einen Kommunikationsnetz-Namensdienst bereitgestellt werden. Ein Verbindungsaufbau von einem ersten ausgewählten Kommunikationsgerät zu einem zweiten Kommunikationsgerät wird bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Die Anwendung bzw. Funktion löst bei einem fehlgeschlagenen Verbindungsaufbauversuch eine zumindest teilweise Aktualisierung der temporär gespeicherten Namensdienst-Informationen aus.

EP 3 059 930 A1 offenbart ein Verfahren zur Konfiguration eines Kommunikationsgeräts eines industriellen Automatisierungssystems, bei dem aus zumindest einem mittels Routerbekanntgabe-Nachrichten übermittelten Präfix und aus einem geräteindividuellen Schnittstellenidentifikator selbständig eine dem Kommunikationsgerät zugeordnete Kommunikationsnetzadresse erzeugt wird. Die Routerbekanntgabe-Nachrichten werden durch zumindest einen innerhalb eines Teilnetzes zugeordneten Router übermittelt. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich nur die beim Server des Namensdienst-Systems abgefragten Kommunikationsnetzadressen zu, die eine Übereinstimmung mit dem durch den Router übermittelten Präfix aufweisen.

Aus EP 3 091714 B1 ist bekannt, dass Kommunikationsgeräte eines industriellen Automatisierungssystems jeweils mittels einer Namensdienst-Komponente überprüfen, ob dem jeweiligen Kommunikationsgerät ein Gerätename mit einem topologischen bzw. hierarchischen Namensbestandteil zugeordnet ist, der eine räumliche oder hierarchische Anordnung des jeweiligen Kommunikationsgeräts im wesentlichen vollständig bezeichnet. Bei einem positiven Überprüfungsergebnis behandeln die Kommunikationsgeräte jeweils ihren zugeordneten Gerätenamen als vollständigen Gerätenamen. Bei einem negativen Überprüfungsergebnis erzeugen die Kommunikationsgeräte jeweils aus mittels Nachrichten mit Router-Bekanntgaben verbreiteten topologischen bzw. hierarchischen Namensbestandteilen sowie einem innerhalb ihres jeweiligen Teilnetzes eindeutigen Namensbestandteil selbständig ihren vollständigen Gerätenamen.

Aus der älteren europäischen Patentanmeldung mit dem Anmeldeaktenzeichen 18170056.8 ist ein Verfahren zur Registrierung von industriellen Automatisierungsgeräten oder Kommunikationsgeräten zugeordneten Gerätenamen in einem Namensdienst-System bekannt. Dabei umfassen zumindest ausgewählte Automatisierungs- oder Kommunikationsgeräte jeweils eine Namensdienst-Komponente. Mittels ihrer Namensdienst-Komponente steuern die ausgewählte Automatisierungs- oder Kommunikationsgeräte ein Senden einer Registrierungsanforderung mit einer Zuordnung zwischen ihrem jeweils zugeordneten Gerätenamen und zumindest einer jeweils konfigurierten Kommunikationsnetzadresse an einen Namensdienst-Server. Den Namensdienst-Komponenten ist jeweils eine Kontroll-Komponente zugeordnet, die ein Senden einer Registrierungsanforderung freigibt oder blockiert.

In industriellen Automatisierungssystemen werden Automatisierungs- oder Kommunikationsgeräte bevorzugt über Gerätenamen anstatt über Kommunikationsnetzadressen angesprochen. Aus diesem Grund kommt einer Erkennung mehrfach zugeordneter identischer Gerätenamen bzw. einer Vermeidung von Namenskonflikten in einem Domain Name System (DNS) eine hohe Bedeutung zu.

Bei Einsatz von DHCP (Dynamic Host Configuration Protocol) bzw. DHCPv6 (Dynamic Host Configuration Protocol for Internet Protocol Version 6) können Namenskonflikte entsprechend Internet Engineering Task Force (IETF), Request for Comments (RFC) 4701 und 4703 (siehe https://tools.ietf.org/html/ rfc4701 und https://tools.ietf.org/html/rfc4703) durch einen DHCP- bzw. DHCPv6-Server grundsätzlich erkannt werden. Dies gilt jedoch nur dann, wenn pro Automatisierungs- oder Kommunikationsgerät genau ein DHCP- bzw. DHCPv6-Server für DNS-Registrierungen verantwortlich ist. Demnach kann es zu Namenskonflikten kommen, sobald mehrere DHCP- bzw. DHCPv6-Server gleichzeitig eingesetzt werden oder geräteseitig DNS-Clients für DNS-Registrierungen verwendet werden.

Darüber hinaus führt ein Geräteaustausch, also ein Austausch eines zuvor verwendeten Geräts durch ein Ersatz-Gerät, entsprechend IETF RFC 4701 und 4703 zu einer geänderten Geräteidentität. Dies erschwert einen Geräteaustausch unter Namensbeibehaltung, da ein zuvor verwendetes Gerät und ein Ersatz-Gerät entsprechend IETF RFC 4701 und 4703 grundsätzlich als unterschiedliche Geräte behandelt werden.

Der vorliegenden Erfindung liegt die Aufgabe zugrunde, ein Verfahren zur Registrierung von industriellen Automatisierungsgeräten oder Kommunikationsgeräten zugeordneten Gerätenamen in einem Namensdienst-System zu schaffen, das eine zuverlässige Erkennung von Namenskonflikten ermöglicht und einen Geräteaustausch unter Namensbeibehaltung unterstützt, sowie eine einfach in bestehende Systeme integrierbare Vorrichtung zur Durchführung des Verfahrens anzugeben.

Diese Aufgabe wird erfindungsgemäß durch ein Verfahren mit den in Patentanspruch 1 angegebenen Merkmalen und durch eine Kontroll-Komponente mit den in Patentanspruch 16 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Registrierung von industriellen Automatisierungsgeräten oder Kommunikationsgeräten zugeordneten Gerätenamen in einem Namensdienst-System, insbesondere einem Domain Name System (DNS), umfasst das Namensdienst-System zumindest einen Namensdienst-Server, der Informationen über Zuordnungen zwischen Gerätenamen und Kommunikationsnetzadressen entsprechend einem Namensauflösungsprotokoll bereitstellt. Vorzugsweise stellt der Namensdienst-Server Informationen über Zuordnungen zwischen Gerätenamen und Kommunikationsnetzadressen entsprechend IETF RFC 1034 und IETF RFC 1035 bereit. Die Gerätenamen können beispielsweise Fully Qualified Domain Names (FQDN) sein.

Zumindest ausgewählte Automatisierungs- oder Kommunikationsgeräte umfassen erfindungsgemäß jeweils eine Namensdienst-Komponente, insbesondere einen DNS Update Client. Mittels ihrer Namensdienst-Komponente steuern die ausgewählten Automatisierungs- oder Kommunikationsgeräte jeweils ein Senden einer Registrierungsanforderung mit einer Zuordnung zwischen ihrem jeweils zugeordneten Gerätenamen und zumindest einer jeweils konfigurierten Kommunikationsnetzadresse an eine Kontroll-Komponente, die dem Namensdienst-Server zugeordnet ist. Die Registrierungsanforderungen können beispielsweise DNS Update Requests sein. Die Kontroll-Komponente ist vorzugsweise in den Namensdienst-Server integriert oder DNS-Server-Proxy.

Erfindungsgemäß überprüft die Kontroll-Komponente, insbesondere gegenüber bereits im Namensdienst-System bzw. in einer der Kontroll-Komponente zugeordneten Datenbank erfassten Informationen, ob die Registrierungsanforderung eine unregistrierte Kommunikationsnetzadresse oder einen veränderten Gerätenamen umfasst. Bei einem positiven Überprüfungsergebnis ermittelt die Kontroll-Komponente, insbesondere gegenüber bereits im Namensdienst-System bzw. in einer der Kontroll-Komponente zugeordneten Datenbank erfassten Informationen, ob die Registrierungsanforderung einen unregistrierten Gerätenamen umfasst. Während die Kontroll-Komponente die Registrierungsanforderung bei einem unregistrierten Gerätenamen an den Namensdienst-Server weiterleitet, ermittelt die Kontroll-Komponente bei einem registrierten Gerätenamen einen Zeitpunkt einer letztmaligen Aktualisierung des Gerätenamens oder der Kommunikationsnetzadresse. Wenn der ermittelte Zeitpunkt um eine vorgegebene Dauer überschritten ist, leitet die Kontroll-Komponente die Registrierungsanforderung an den Namensdienst-Server weiter. Auf diese Weise können je nach Anwendungsfall - Erst-Inbetriebnahme, Geräteaustausch, Adressänderung/Geräteumzug oder mehrfache Vergabe identischer Namen - geeignete Maßnahmen zur Bereitstellung konsistenter DNS-Informationen durch den Namensdienst-Server eingeleitet werden.

Entsprechend einer bevorzugten Ausgestaltung der vorliegenden Erfindung ist vorgesehen, dass die Kontroll-Komponente Registrierungsanforderungen entweder verwirft oder an den Namensdienst-Server weiterleitet. Dabei wird mittels einer weitergeleiteten Registrierungsanforderung eine Registrierung der Zuordnung zwischen dem Gerätenamen und der Kommunikationsnetzadresse des jeweiligen Automatisierungs- oder Kommunikationsgeräts im Namensdienst-System veranlasst. Vorteilhafterweise verwirft die Kontroll-Komponente die Registrierungsanforderung, wenn der ermittelte Zeitpunkt weniger als die vorgegebene Dauer zurückliegt. Darüber hinaus wird der Zeitpunkt einer letztmaligen Aktualisierung des Gerätenamens oder der Kommunikationsnetzadresse nach jedem Weiterleiten oder Verwerfen einer Registrierungsanforderung angepasst. Damit können Anwendungsfälle, wie Erst-Inbetriebnahme, Geräteaustausch, Adressänderung/Geräteumzug oder mehrfache Vergabe identischer Namen, besonders zuverlässig erkannt werden.

Die Kontroll-Komponente ermittelt bei einem registrierten Gerätenamen vorzugsweise einen Zeitpunkt einer letztmaligen Aktualisierung des Gerätenamens im Namensdienst-System bzw. in einer der Kontroll-Komponente zugeordneten Datenbank. Entsprechend einer weiteren vorteilhaften Ausgestaltung der vorliegenden Erfindung ermittelt die Kontroll-Komponente bei einer mit einem unveränderten Gerätenamen registrierten Kommunikationsnetzadresse einen Zeitpunkt einer letztmaligen Aktualisierung des Gerätenamens oder der Kommunikationsnetzadresse. In diesem Fall leitet die Kontroll-Komponente die Registrierungsanforderung beispielsweise auch bei einer mit einem unveränderten Gerätenamen registrierten Kommunikationsnetzadresse an den Namensdienst-Server weiter, wenn der ermittelte Zeitpunkt um die vorgegebene Dauer überschritten ist. Somit ist auch in diesem Anwendungsfall eine zuverlässige Aktualisierung der durch den Namensdienst-Server bereitgestellten Informationen gewährleistet.

Entsprechend einer besonders bevorzugten Ausgestaltung der vorliegenden Erfindung ist der Kontroll-Komponente eine Datenbank zugeordnet, in der für jede von einem Automatisierungs- oder Kommunikationsgerät empfangene Registrierungsanforderung ein Datensatz gespeichert wird, der jeweils die Kommunikationsnetzadresse, den Gerätenamen, den Zeitpunkt einer letztmaligen Aktualisierung des Gerätenamens oder der Kommunikationsnetzadresse und eines Weiterleitungsstatus einer letztmaligen Registrierungsanforderung umfasst. Auf diese Weise kann ein Datenmodell realisiert werden, anhand dessen die Kontroll-Komponente schnell und zuverlässig entscheidet, ob beispielsweise ein Namenskonflikt vorliegt.

Die Namensdienst-Komponenten können beispielsweise jeweils einen Namensdienst-Client für dynamisches DNS umfassen. In diesem Fall senden die ausgewählten Automatisierungs- oder Kommunikationsgeräte Registrierungsanforderungen jeweils mittels ihres Namensdienst-Client für dynamisches DNS. Entsprechend einer alternativen Ausführungsform der vorliegenden Erfindung ist den ausgewählten Automatisierungs- oder Kommunikationsgeräten jeweils ein Konfigurationsserver zur Adress-, Namens- bzw. Namensdienstkonfiguration zugeordnet. Dabei werden Registrierungsanforderungen für die ausgewählten Automatisierungs- oder Kommunikationsgeräte jeweils mittels des zugeordneten Konfigurationsservers gesendet. Der jeweils zugeordnete Konfigurationsserver kann insbesondere ein DHCP- bzw. DHCPv6-Server sein, wobei die ausgewählten Automatisierungs- oder Kommunikationsgeräte jeweils mittels ihrer Namensdienst-Komponente ein Senden einer Registrierungsanforderung durch den zugeordneten Konfigurationsservers steuern. Damit kann die vorliegende Erfindung auch in Automatisierungssystemen mit einem oder mehreren DHCP- bzw. DHCPv6-Servern genutzt werden.

Die erfindungsgemäße Kontroll-Komponente ist zur Durchführung eines Verfahrens entsprechend vorangehenden Ausführungen geeignet und dafür ausgestaltet und eingerichtet, einem Namensdienst-Server eines Namensdienst-Systems zugeordnet zu werden, der Informationen über Zuordnungen zwischen Gerätenamen und Kommunikationsnetzadressen entsprechend einem Namensauflösungsprotokoll bereitstellt. Außerdem ist die Kontroll-Komponente dafür ausgestaltet und eingerichtet, zu überprüfen, ob eine Registrierungsanforderung eine unregistrierte Kommunikationsnetzadresse oder einen veränderten Gerätenamen umfasst. Dabei umfasst die Registrierungsanforderung eine Zuordnung zwischen einem Gerätenamen und zumindest einer konfigurierten Kommunikationsnetzadresse eines Automatisierungs- oder Kommunikationsgeräts. Darüber hinaus ist die Kontroll-Komponente dafür ausgestaltet und eingerichtet, bei einem positiven Überprüfungsergebnis zu ermitteln, ob die Registrierungsanforderung einen unregistrierten Gerätenamen umfasst.

Erfindungsgemäß ist die Kontroll-Komponente dafür eingerichtet und ausgestaltet, die Registrierungsanforderung bei einem unregistrierten Gerätenamen an den Namensdienst-Server weiterzuleiten und bei einem registrierten Gerätenamen einen Zeitpunkt einer letztmaligen Aktualisierung des Gerätenamens oder der Kommunikationsnetzadresse zu ermitteln. Zusätzlich ist die Kontroll-Komponente dafür eingerichtet und ausgestaltet, die Registrierungsanforderung an den Namensdienst-Server weiterzuleiten, wenn der ermittelte Zeitpunkt um eine vorgegebene Dauer überschritten ist.

Die vorliegende Erfindung wird nachfolgend an einem Ausführungsbeispiel anhand der Zeichnung näher beschrieben. Es zeigt
- Figur 1: ein mehrere Zellen umfassendes industrielles Automatisierungssystem,
- Figur 2: ein Ablaufdiagramm für eine Registrierung neuer oder geänderter Gerätenamen bzw. -adressen in einem Domain Name System des industriellen Automatisierungssystems gemäß Figur 1.

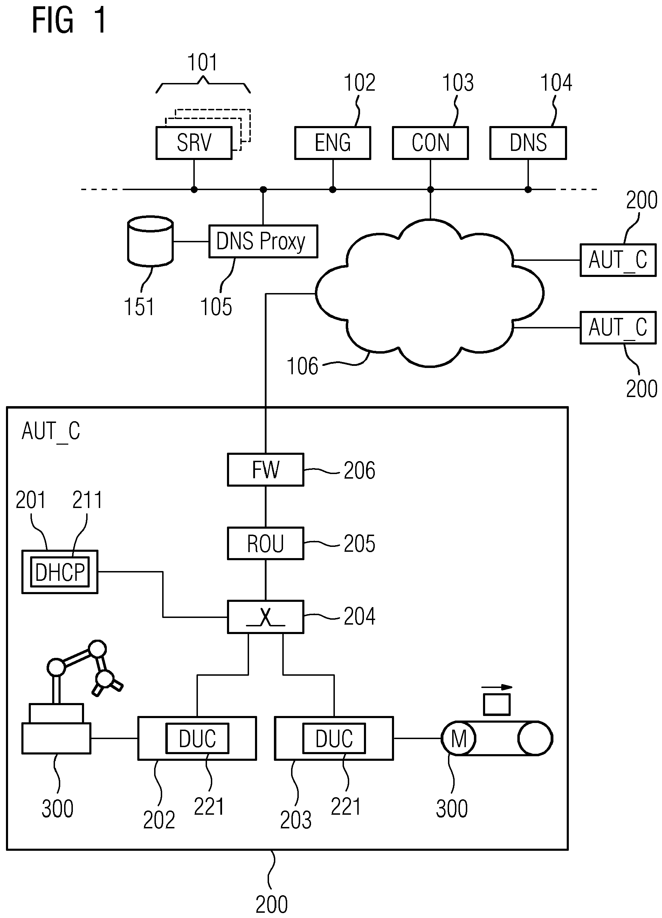

Das in Figur 1 dargestellte industrielle Automatisierungssystem umfasst Zellen 200 mit jeweils mehreren an einen Switch 204 angeschlossenen Automatisierungsgeräten 201-203, die im vorliegenden Ausführungsbeispiel über einen der jeweiligen Zelle 200 zugeordneten Router 205 mit einem Cloud-Computing-System 101 verbunden sind. Vorzugsweise ist dem Router 205 hierbei ein Firewall-System 206 vorgeschaltet. Grundsätzlich können sowohl der Switch 204 als auch das Firewall-System 206 in den Router 205 integriert sein. Das Cloud-Computing-System 101 umfasst jeweils mehrere Server-Einheiten, durch die IT-Infrastruktur, wie Speicherplatz, Rechenleistung oder Anwendungssoftware, als Dienst bereitgestellt wird. Insbesondere können die durch die Server-Einheiten bereitgestellten Dienste Anwendungen bzw. Funktionen zur System-, Prozess- und Geräteüberwachung, zur Gerätesteuerung und -konfiguration, zur Erfassung und Analyse von den Automatisierungsgeräten 201-203 zugeordneten Messwerten und Zustandsinformationen sowie Kommunikations- und Automatisierungsfunktionen umfassen.

Die Zellen 200 können beispielsweise über ein IP-basiertes Weitverkehrsnetz 106 oder über ein industrielles Kommunikationsnetz mit dem Cloud-Computing-System 101 verbunden sein. Im letztgenannten Fall tritt an die Stelle des Cloud-Computing-Systems 101 ein Edge- oder Fog-Computing-System, das funktional im Wesentlichen einem Cloud-Computing-System entspricht und gegenüber diesem eine unterschiedliche administrative Kontrolle aufweist. Im vorliegenden Ausführungsbeispiel sind die Zellen 200 über das Weitverkehrsnetz 106 außerdem mit einem Engineering-System 102 zur Projektierung von Automatisierungsgeräten, mit einem Leitsystem 103 zur Überwachung von Automatisierungsgeräten und mit einem DNS-Server (Domain Name System) 104 eines Namensdienst-Systems verbunden. Der DNS-Server 104 stellt insbesondere Informationen über Zuordnungen zwischen Gerätenamen und Kommunikationsnetzadressen entsprechend IETF RFC 1034 und IETF RFC 1035 für eine Namensauflösung bereit. Außerdem ist ein dem DNS-Server 104 zugeordneter DNS-Proxy 105 an das Weitverkehrsnetz 106 angeschlossen.

Die Automatisierungsgeräte 201-203 können beispielsweise Bedien- und Beobachtungsstationen, speicherprogrammierbare Steuerungen, RFID-Lesegeräte oder Systeme für maschinelle Bildverarbeitung sein. Neben den Automatisierungsgeräten 201-203 können auch Netzinfrastrukturgeräte, wie Switche, Router oder Firewalls, direkt oder mittelbar mit dem Router 205 bzw. mit dem Switch 204 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Eingabe/Ausgabe-Einheiten können als dezentrale Peripheriemodule ausgestaltet sein, die entfernt von einer speicherprogrammierbaren Steuerung angeordnet sind.

Speicherprogrammierbare Steuerungen umfassen üblicherweise jeweils ein Kommunikationsmodul, eine Zentraleinheit sowie zumindest eine Eingabe/Ausgabe-Einheit. Über Kommunikationsmodule können speicherprogrammierbare Steuerungen beispielsweise mit dem Router 205, mit dem Switch 204 bzw. mit einem Feldbus verbunden werden. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen 300. Die Zentraleinheiten sind insbesondere für eine Ermittlung geeigneter Steuerungsgrößen aus erfassten Messgrößen vorgesehen. Obige Komponenten speicherprogrammierbarer Steuerungen werden vorzugsweise über ein Rückwandbus-System miteinander verbunden.

Bedien- und Beobachtungsstationen dienen zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere werden Bedien- und Beobachtungsstationen zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Die Zellen 200 des in Figur 1 dargestellten industriellen Automatisierungssystems umfassen jeweils ein Automatisierungsgerät 201, das als Zell-Controller eine DHCP- bzw. DHCPv6-Servereinheit 211 zur Adress-, Namens- und/oder Namensdienstkonfiguration von Automatisierungsgeräten 202-203 innerhalb der jeweiligen Zelle 200 aufweist. Innerhalb des industriellen Automatisierungssystems sind also mehrere DHCP- bzw. DHCPv6-Servern vorgesehen.

Zumindest ausgewählte Automatisierungsgeräte 202-203 umfassen jeweils einen DNS Update Client 221, 231. Mittels ihres DNS Update Client 221, 231 steuern die ausgewählten Automatisierungsgeräte 202-203 ein Senden eines DNS Update Request mit einer Zuordnung zwischen ihrem jeweils zugeordneten Gerätenamen und zumindest einer jeweils konfigurierten Kommunikationsnetzadresse an den DNS-Proxy 105. Eine Zuordnung der Gerätenamen erfolgt vorzugsweise entsprechend EP 2 996 311 A1 bzw. EP 3 091 714 B1, auf deren Offenbarungsgehalt hier ausdrücklich Bezug genommen wird. Im vorliegenden Ausführungsbeispiel sind die Gerätenamen Fully Qualified Domain Names (FQDN), und die ausgewählten Automatisierungsgeräte 202-203 senden DNS Update Requests jeweils mittels ihres DNS Update Client 221, 231 selbst. Entsprechend einer alternativen Ausgestaltungsvariante werden die DNS Update Requests dagegen jeweils mittels der DHCP- bzw. DHCPv6-Servereinheit 211 gesendet. In diesem Fall steuern die ausgewählten Automatisierungsgeräte 202-203 mittels ihres DNS Update Client 221, 231 ein Senden eines DNS Update Request durch die DHCP- bzw. DHCPv6-Servereinheit 211.

Entsprechend dem vorliegenden Ausführungsbeispiel ist vorgesehen, dass der DNS-Proxy 105 DNS Update Requests entweder verwirft und ihnen als Weiterleitungsstatus BLOCKED zuordnet oder an den DNS-Server 104 weiterleitet und ihnen als Weiterleitungsstatus UNBLOCKED zuordnet. Mittels eines durch den DNS-Proxy 105 weitergeleiteten DNS Update Request wird eine Registrierung der Zuordnung zwischen dem Gerätenamen und der Kommunikationsnetzadresse des jeweiligen Automatisierungs- oder Kommunikationsgeräts 202-203 im Namensdienst-System veranlasst. Dem DNS-Proxy 105 ist eine Datenbank 151 zugeordnet, in der für jeden von einem Automatisierungs- oder Kommunikationsgerät 202-203 empfangenen DNS Update Request ein Datensatz gespeichert wird, der jeweils die Kommunikationsnetzadresse, den Gerätenamen, den Zeitpunkt einer letzten Aktualisierung des Gerätenamens oder der Kommunikationsnetzadresse und den Weiterleitungsstatus eines letzten DNS Update Request umfasst.

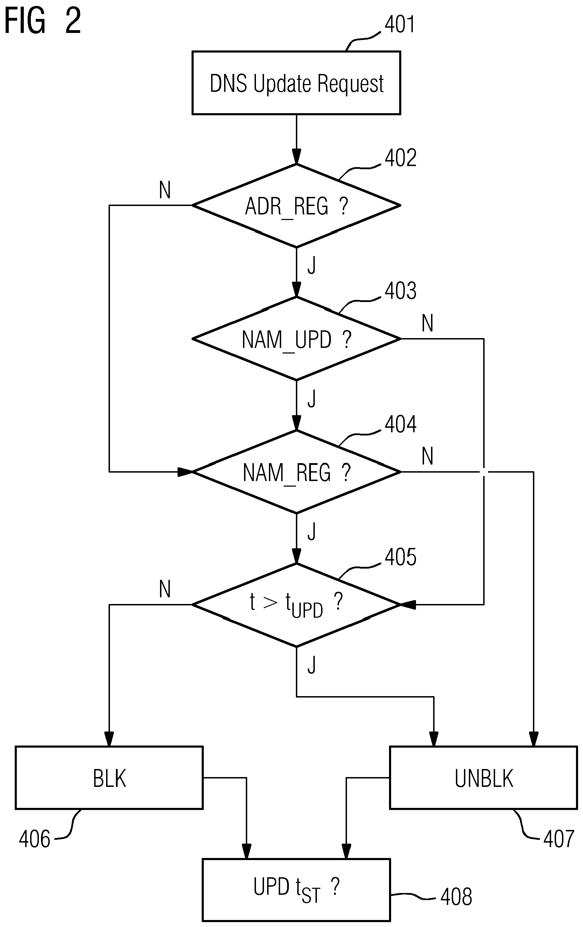

Nach Empfang eines DNS Update Request entsprechend Schritt 401 des in Figur 2 dargestellten Ablaufdiagramms überprüft der DNS-Proxy 105 als Kontroll-Komponente gegenüber bereits im Namensdienst-System bzw. in der Datenbank 151 erfassten Informationen, ob der DNS Update Request eine unregistrierte Kommunikationsnetzadresse (Schritt 402) oder einen veränderten Gerätenamen umfasst (Schritt 403). Bei einem positiven Überprüfungsergebnis ermittelt der DNS-Proxy 105 in Schritt 404 gegenüber bereits im Namensdienst-System bzw. in der Datenbank 151 erfassten Informationen, ob der DNS Update Request einen unregistrierten Gerätenamen umfasst.

Ist der Gerätename unregistriert, leitet der DNS-Proxy 105 den DNS Update Request an den DNS-Server 104 weiter und ordnet dem DNS Update Request den Weiterleitungsstatus UNBLOCKED zu (Schritt 407). Dagegen ermittelt der DNS-Proxy 105 bei einem registrierten Gerätenamen in Schritt 405 den Zeitpunkt der letzten Aktualisierung des Gerätenamens oder der Kommunikationsnetzadresse im Namensdienst-System bzw. in der Datenbank 151. Wenn der ermittelte Zeitpunkt um eine vorgegebene Dauer überschritten ist, leitet der DNS-Proxy 105 den DNS Update Request an den DNS-Server 104 weiter und ordnet dem DNS Update Request entsprechend Schritt 407 den Weiterleitungsstatus UNBLOCKED zu. Liegt der ermittelte Zeitpunkt dagegen weniger als die vorgegebene Dauer zurück, verwirft der DNS-Proxy 105 den DNS Update Request und ordnet dem DNS Update Request entsprechend Schritt den Weiterleitungsstatus BLOCKED zu (Schritt 408). Nach jedem Weiterleiten oder Verwerfen eines DNS Update Request passt der DNS-Proxy 105 den in der Datenbank 151 gespeicherten Zeitpunkt der letzten Aktualisierung des Gerätenamens oder der Kommunikationsnetzadresse an. Ergibt obige Überprüfung, dass der DNS Update Request eine registrierte Kommunikationsnetzadresse (Schritt 402) sowie einen unveränderten Gerätenamen umfasst (Schritt 403), ermittelt der DNS-Proxy 105 auch bei einer mit einem unveränderten Gerätenamen registrierten Kommunikationsnetzadresse entsprechend Schritt 405 den Zeitpunkt der letzten Aktualisierung des Gerätenamens oder der Kommunikationsnetzadresse. Wenn der ermittelte Zeitpunkt um die vorgegebene Dauer überschritten ist, leitet der DNS-Proxy 105 auch in diesem Fall den DNS Update Request an den DNS-Server 104 weiter und ordnet dem DNS Update Request den Weiterleitungsstatus UNBLOCKED zu (Schritt 407). Andernfalls verwirft der DNS-Proxy 105 den DNS Update Request analog zu obigen Ausführungen und ordnet dem DNS Update Request entsprechend Schritt den Weiterleitungsstatus BLOCKED zu (Schritt 408).

Entsprechend einer alternativen Ausführungsform können vorangehend beschriebene Kontroll-Komponenten-Funktionen des DNS-Proxy 105 auch in den DNS-Server 104 integriert sein.

## Patentansprüche

1. Verfahren zur Registrierung von industriellen Automatisierungsgeräten oder Kommunikationsgeräten zugeordneten Gerätenamen in einem Namensdienst-System, bei dem
- das Namensdienst-System zumindest einen Namensdienst-Server (104) umfasst, der Informationen über Zuordnungen zwischen Gerätenamen und Kommunikationsnetzadressen entsprechend einem Namensauflösungsprotokoll bereitstellt,
- zumindest ausgewählte Automatisierungs- oder Kommunikationsgeräte (202-203) jeweils eine Namensdienst-Komponente (221, 231) umfassen und mittels ihrer Namensdienst-Komponente ein Senden einer Registrierungsanforderung mit einer Zuordnung zwischen ihrem jeweils zugeordneten Gerätenamen und zumindest einer jeweils konfigurierten Kommunikationsnetzadresse an eine Kontroll-Komponente steuern, die dem Namensdienst-Server (104) zugeordnet ist,
- die Kontroll-Komponente (105) überprüft, ob die Registrierungsanforderung eine unregistrierte Kommunikationsnetzadresse (402) oder einen veränderten Gerätenamen umfasst (403),
- die Kontroll-Komponente (105) bei einem positiven Überprüfungsergebnis ermittelt, ob die Registrierungsanforderung einen unregistrierten Gerätenamen umfasst (404),
- die Kontroll-Komponente (105) die Registrierungsanforderung bei einem unregistrierten Gerätenamen an den Namensdienst-Server weiterleitet (407),
- die Kontroll-Komponente bei einem registrierten Gerätenamen einen Zeitpunkt einer letztmaligen Aktualisierung des Gerätenamens oder der Kommunikationsnetzadresse ermittelt (405),
- die Kontroll-Komponente (105) die Registrierungsanforderung an den Namensdienst-Server (104) weiterleitet (407), wenn der ermittelte Zeitpunkt um eine vorgegebene Dauer überschritten ist.

2. Verfahren nach Anspruch 1,
bei dem die Kontroll-Komponente (105) Registrierungsanforderungen entweder verwirft oder an den Namensdienst-Server (104) weiterleitet und bei dem mittels einer weitergeleiteten Registrierungsanforderung eine Registrierung der Zuordnung zwischen dem Gerätenamen und der Kommunikationsnetzadresse des jeweiligen Automatisierungs- oder Kommunikationsgeräts im Namensdienst-System veranlasst wird.

3. Verfahren nach Anspruch 2,
bei dem die Kontroll-Komponente (105) die Registrierungsanforderung verwirft (406), wenn der ermittelte Zeitpunkt weniger als die vorgegebene Dauer zurückliegt.

4. Verfahren nach einem der Ansprüche 2 oder 3,
bei dem der Zeitpunkt einer letztmaligen Aktualisierung des Gerätenamens oder der Kommunikationsnetzadresse nach jedem Weiterleiten oder Verwerfen einer Registrierungsanforderung angepasst wird (408).

5. Verfahren nach einem der Ansprüche 1 bis 4,
bei dem die Kontroll-Komponente (105) gegenüber bereits im Namensdienst-System und/oder in einer der Kontroll-Komponente zugeordneten Datenbank (151) erfassten Informationen überprüft, ob die Registrierungsanforderung eine unregistrierte Kommunikationsnetzadresse oder einen veränderten Gerätenamen umfasst.

6. Verfahren nach einem der Ansprüche 1 bis 5,
bei dem die Kontroll-Komponente (105) bei einem positiven Überprüfungsergebnis gegenüber bereits im Namensdienst-System und/oder in einer der Kontroll-Komponente zugeordneten Datenbank (151) erfassten Informationen ermittelt, ob die Registrierungsanforderung einen unregistrierten Gerätenamen umfasst.

7. Verfahren nach einem der Ansprüche 1 bis 6,
bei dem die Kontroll-Komponente (105) bei einem registrierten Gerätenamen einen Zeitpunkt einer letztmaligen Aktualisierung des Gerätenamens im Namensdienst-System und/oder in einer der Kontroll-Komponente zugeordneten Datenbank (151) ermittelt.

8. Verfahren nach einem der Ansprüche 1 bis 7,
bei dem die Kontroll-Komponente (105) bei einer mit einem unveränderten Gerätenamen registrierten Kommunikationsnetzadresse einen Zeitpunkt einer letztmaligen Aktualisierung des Gerätenamens oder der Kommunikationsnetzadresse ermittelt.

9. Verfahren nach Anspruch 8,
bei dem die Kontroll-Komponente (105) die Registrierungsanforderung auch bei einer mit einem unveränderten Gerätenamen registrierten Kommunikationsnetzadresse an den Namensdienst-Server (104) weiterleitet, wenn der ermittelte Zeitpunkt um die vorgegebene Dauer überschritten ist.

10. Verfahren nach einem der Ansprüche 1 bis 9,
bei dem der Kontroll-Komponente (105) eine Datenbank (151) zugeordnet ist, in der für jede von einem Automatisierungs- oder Kommunikationsgerät empfangene Registrierungsanforderung ein Datensatz gespeichert wird, der jeweils die Kommunikationsnetzadresse, den Gerätenamen, den Zeitpunkt einer letztmaligen Aktualisierung des Gerätenamens oder der Kommunikationsnetzadresse und eines Weiterleitungsstatus einer letztmaligen Registrierungsanforderung umfasst.

11. Verfahren nach einem der Ansprüche 1 bis 10,
bei dem die Kontroll-Komponente (104) in den Namensdienst-Server (105) integriert oder DNS-Server-Proxy ist und bei dem die Gerätenamen Fully Qualified Domain Names sind.

12. Verfahren nach einem der Ansprüche 1 bis 11,
bei dem die Namensdienst-Komponenten (221, 231) jeweils einen Namensdienst-Client für dynamisches DNS umfassen und bei dem die ausgewählten Automatisierungs- oder Kommunikationsgeräte Registrierungsanforderungen jeweils mittels ihres Namensdienst-Client für dynamisches DNS senden.

13. Verfahren nach einem der Ansprüche 1 bis 11,
bei dem den ausgewählten Automatisierungs- oder Kommunikationsgeräten (202-203) jeweils ein Konfigurationsserver (211) zur Adress-, Namens- und/oder Namensdienstkonfiguration zugeordnet ist und bei dem Registrierungsanforderungen für die ausgewählten Automatisierungs- oder Kommunikationsgeräte jeweils mittels des zugeordneten Konfigurationsservers gesendet werden.

14. Verfahren nach Anspruch 13,
bei dem der jeweils zugeordnete Konfigurationsserver (211) ein DHCP- und/oder DHCPv6-Server ist und bei dem die ausgewählten Automatisierungs- oder Kommunikationsgeräte (202-203) jeweils mittels ihrer Namensdienst-Komponente (221, 231) ein Senden einer Registrierungsanforderung durch den zugeordneten Konfigurationsservers steuern.

15. Verfahren nach einem der Ansprüche 1 bis 14,
bei dem der Namensdienst-Server (105) Informationen über Zuordnungen zwischen Gerätenamen und Kommunikationsnetzadressen entsprechend IETF RFC 1034 und IETF RFC 1035 bereitstellt und bei dem die Registrierungsanforderungen DNS Update Requests sind.

16. Kontroll-Komponente zur Durchführung eines Verfahrens nach einem der Ansprüche 1 bis 15, wobei die Kontroll-Komponente dafür eingerichtet und ausgestaltet ist,
- einem Namensdienst-Server (104) eines Namensdienst-Systems zugeordnet zu werden, der Informationen über Zuordnungen zwischen Gerätenamen und Kommunikationsnetzadressen entsprechend einem Namensauflösungsprotokoll bereitstellt,
- zu überprüfen, ob eine Registrierungsanforderung eine unregistrierte Kommunikationsnetzadresse (402) oder einen veränderten Gerätenamen umfasst (403),
wobei die Registrierungsanforderung eine Zuordnung zwischen einem Gerätenamen und zumindest einer konfigurierten Kommunikationsnetzadresse eines Automatisierungs- oder Kommunikationsgeräts (202-203) umfasst,
- bei einem positiven Überprüfungsergebnis zu ermitteln, ob die Registrierungsanforderung einen unregistrierten Gerätenamen umfasst (404),
- die Registrierungsanforderung bei einem unregistrierten Gerätenamen an den Namensdienst-Server weiterzuleiten (407),
- bei einem registrierten Gerätenamen einen Zeitpunkt einer letztmaligen Aktualisierung des Gerätenamens oder der Kommunikationsnetzadresse zu ermitteln (405),
- die Registrierungsanforderung an den Namensdienst-Server weiterzuleiten (407), wenn der ermittelte Zeitpunkt um eine vorgegebene Dauer überschritten ist.
